# EUROPEAN PATENT APPLICATION

(11) **EP 1 591 881 A2**
(43) Date of publication of application: **02.11.2005**
(21) Application number: 04257252.9
(22) Date of filing: 23.11.2004
(51) Int. Cl.: G06F 3/06

(54) **Path reserve management apparatus**

(30) Priority: 26.04.2004 JP 2004129703
(71) Applicant: Hitachi, Ltd., Tokyo (JP)
(72) Inventor: Furuumi, Noboru, Hitachi. Ltd. I.P.P., Tokyo 100-8220 (JP); Takeuchi, Hisaharu, Hitachi. Ltd. I.P.P., Tokyo 100-8220 (JP)
(74) Representative: Holt, Daniel Richard

(57) **Abstract**

A personal computer (PC) inputs path information for forming a path group and a storage controller (SCS) manages the path group. For example, a physical path PS#1 (HBA#A-PT1), a path PS#2 (HBA#B-PT2) and a path PS#3 (HBA#C-PT3) are defined as a path group PG#1 and instructed to the storage controller (SCS). This indication is stored in a table (TB).
Host (HOST A) recognizes this path group information, too. Host (HOST A) designates "Persistent Reserve OUT" on the path PS#1. The storage controller recognizes that the path group PG#1 inclusive of this path PS#1 is reserved as a whole. When Host (HOST B) attempts release this reserve state illegally through a path PS#1 of Host (HOST A), Host (HOST B) issues "Persistent Reserve OUT" command by KEY#1. Because the path PS#1 does not belong to the path group managed by the storage controller (SCS), however, the reserve release request is rejected.

## Description

This invention relates to a path reserve management apparatus suitable for an information processing system including one or a plurality of host apparatuses and a storage subsystem connected to the host apparatuses either directly or through a network.

An information processing system including one or a plurality of host apparatuses (hereinafter called "host computers" or merely "hosts", too) and a storage subsystem connected to the hosts either directly or through a network such as a storage area network (SAN) has the storage subsystem including one or a plurality of storage units and a storage controller for controlling the storage units. A storage unit is called "volume", too, and is typically one or a plurality of disk devices. The storage controller executes control for permitting a command such as an I/O command from the host to access the storage units constituting the storage subsystem. The storage controller has one or a plurality of input/output ports. One or a plurality of hosts are connected to one port to process the command.

A main frame has a reserve mechanism such that while a certain host executes an I/O processing such as a series of read/write operations (Read/Write, reference/updating) to a specific volume, the certain host executing the I/O processing keeps the access right to this volume lest an I/O request, that is, the access (reference/updating, etc) is made to this volume from other hosts.

This reserve is executed when a command for instructing reserve to this volume is generated and path management is made so that when the I/O request is made from physical paths (hereinafter merely called "paths", too) other than the physical path making reserve for the reserved volume, a Busy state is reported to the paths making the access and the I/O request is rejected.

Incidentally, as for an ordinary protection technology against an illegal I/O request, JP-A-2003-059180 describes a read/write apparatus for preventing illegal utilization of data by judging whether or not a storage subsystem can be utilized on the basis of a device ID written into storage unit (hard disk drive). JP-A-2001-184248 discloses a data access management apparatus that immediately restores an overall system when a file management system undergoes system-down by causing a spare system to operate a new file management system by means of access control information representing write right to a storage subsystem generated from the file management system.

A concept "path group" for managing a plurality of physical paths as one group exists in the main frame. The path group divides subordinate physical paths (maximum 8) into groups in each volume unit for each host and manages the volumes. To manage the volumes, the host allocates ID to each path group and the storage controller that controls the volumes recognizes the paths having the same ID as the same group. The formation of such path groups is made by a command code "X'AF"' (refer to published manual "ESCON I/O Interface" of IBM, US).

However, the concept of such path groups does not exist in an open system to which the invention is directed. In the open system, therefore, it is not possible to judge from the storage subsystem side whether or not to release reserve from other paths and to avoid compulsive release of the reserve state by a third party by generating a "Target Reset" command from ports other than that of the reserve path.

The functions on the host side include the function that automatically releases the reserve state from another normal physical path belonging to the host when the host detects a path failure. In this case, it is not clear to the storage subsystem side whether this release instruction is reasonable. Therefore, when the reserve release instruction is generated from other physical path, the reserve that should not originally be released is released from other path.

It is therefore an aim of the invention to provide a path reserve management apparatus that permits simultaneous access from a plurality of physical paths to the same volume in an open system.

It is another aim of the invention to provide a path reserve management apparatus that prevents illegal reserve release by inhibiting reserve release from paths other than a path group in an open system and improves security.

To accomplish the aims described above, the invention divides a plurality of physical paths into groups on the side of a storage subsystem in an open system and manages the path groups. The storage subsystem includes storage unit and a storage controller. When a reserve command of a volume is made to one physical path that is grouped, the storage controller manages a plurality of grouped paths as a whole as a reserved state. When a reserve release command is given from paths other than the grouped physical paths, this reserve release command is rejected.

The invention makes it possible to divide physical paths into groups and to manage the groups on the side of a storage subsystem in an open system. In other words, because information representing which physical paths are to be grouped is given in advance to the storage subsystem, a third party cannot illegally release a reserve state from other paths even when attempting to do so and security can be improved.

Preferably, information of physical paths from main and sub systems is set in advance as a group to a storage subsystem for a host of other site (sub-side system) that backs up a certain site (main-side system) at the time of a system failure of the certain site. Therefore, even when the main-side system undergoes system-down and a reserve state is left remaining, it is possible to restore the system by using the paths from the grouped sub-side system and to consecutively operate the overall system.

### In the drawings:

Fig. 1 is an explanatory view useful for explaining an overall construction of an information processing system according to the invention;
Fig. 2 is a conceptual view useful for explaining a path reserve management apparatus by simplifying the information processing system shown in Fig. 1;
Fig. 3 is an explanatory view useful for explaining a formation procedure of path groups in a main frame;
Fig. 4 is an explanatory view useful for explaining a concept of a path reserve management apparatus in the main frame;
Fig. 5 is an explanatory view useful for
explaining a reserve of a physical path unit in an open system;
Fig. 6 is an explanatory view useful for explaining a procedure of reserve execution in the physical path unit;
Fig. 7 is an explanatory view useful for explaining a reserve system of a plurality of physical paths in the open system;
Fig. 8 is an explanatory view useful for explaining a reserve release processing at the time of path failure in the open system;
Fig. 9 is an explanatory view useful for explaining an illegal release in the open system;
Fig. 10 is an explanatory view useful for explaining an example of an illegal reserve release in the open system;
Fig. 11 is an explanatory view useful for explaining reserve release at the time of a path failure in the open system;
Fig. 12 is an explanatory view useful for explaining an information processing system having improved security by employing a counter-measure against illegal path release;
Fig. 13 is an explanatory view useful for explaining a reserve release processing at the time of a path failure for facilitating system exchange when a system failure occurs in a system having main and sub sites;
Fig. 14 is an explanatory view useful for explaining in further detail the construction of the information processing system according to the invention;
Fig. 15 is an explanatory view useful for explaining another method of consciousness matching between a host and a storage controller;
Fig. 16 is flowchart useful for explaining a procedure for concretely inputting physical path information from a personal computer externally connected to the storage controller;
Fig. 17 is flowchart useful for explaining a procedure for bringing a certain physical path into a reserve state in accordance with reserve command generated for the physical path;
Fig. 18 is flowchart useful for explaining a procedure for checking whether or not a certain physical path is under the reserve state when an I/O is generated for the physical path;
   Fig. 19 is flowchart useful for explaining a procedure for judging whether or not reserve release command generated is reasonable and for executing the reserve release when the reserve command is reasonable;
Fig. 20 is flowchart useful for explaining a procedure when the storage controller performs grouping on the basis of only a report of a function level as input from outside the storage controller;
Fig. 21 is flowchart useful for explaining a procedure of reserve management on the side of a host computer;
Fig. 22 is flowchart useful for explaining a procedure for generating an I/O to other path inside the same path group when the host computer has already reversed a path in a physical path group unit; and
Fig. 23 is flowchart useful for explaining a procedure when the host computer decides paths to be grouped in accordance with a function level transmitted to the storage controller in response to "Mode Sense" generated by the host computer.

Embodiments of the invention will be hereinafter explained in detail with reference to the accompanying drawings. In the explanation that follows, the invention will be explained with reference to the problems of existing systems.

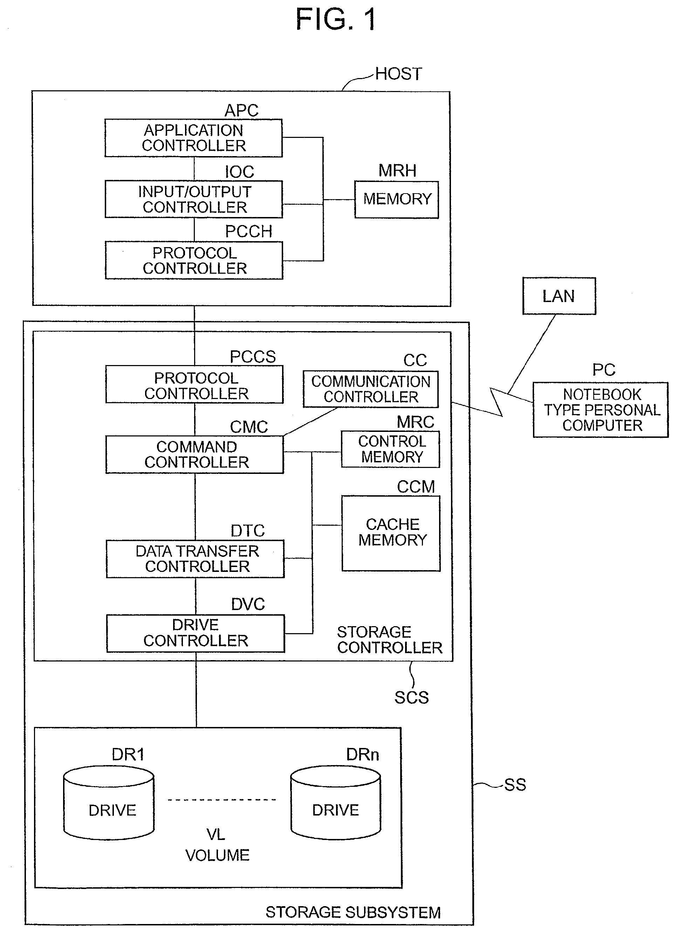

Fig. 1 is an explanatory view useful for explaining an overall construction of an information processing system according to the invention. This information processing system (computer system) includes a host apparatus (HOST) and a storage subsystem SS. Fig. 1 shows only one HOST connected to the storage subsystem SS. The HOST includes an application controller APC for controlling execution of an application program, an input/output controller IOC for controlling input/output instructions of data inside a storage controller, a protocol controller PCCH for controlling a protocol relating to the exchange of input/output data with the storage controller and a memory MRH for executing and controlling data to be inputted and outputted and each program.

On the other hand, the storage subsystem SS includes storage unit (volume) VL and a storage controller for controlling this volume VL. The volume VL has one or a plurality of drives DR (DR1, DR2, ..., DRn). Though the drive DR will be hereby explained as a hard disk drive, other storage unit may of course be used, too.

The storage controller SCS includes a protocol controller PCCS, a command controller CMC, a drive controller DVC, a cache memory CCM, a control memory MRC and a communication controller CC. The protocol controller PCCS controls a protocol with the protocol controller PCCH of the HOST when data transfer is executed between the protocol controller PCCS and the HOST. The command controller CMC analyzes a command for executing the input/output command received from the HOST, transfers the data between the cache memory CCM and the HOST, judges whether or not intended data exists on the cache memory CCM, and gives a readout command of the intended data from the drive of the volume VL in the case of a cache-miss (absence of data). Incidentally, a personal computer PC as data input means for inputting data from outside is connected to the storage controller SCS through an LAN, or the like.

The drive controller DVC writes the data on the cache memory CCM to the drive and reads out the data from the drive to the cache memory in accordance with the command from the command controller CMC. The cache memory is a memory used for temporarily buffering the write data from the HOST or storing the data read out from the drive and improving a hit ratio (read-hit ratio).

The control memory MRC is a memory for storing a table of various kinds of control information necessary for the command controller CMC and the drive controller DVC to input and output the data. The control memory MRC further stores various kinds of information to be managed in the storage controller SCS, too. Information for grouping the physical paths of the invention to be later described is stored in this control memory MRC.

The communication controller CC controls communications with the personal computer connected to the storage controller SCS. The data input means is not limited to the personal computer PC, and an operation portion and a display portion may be provided to a part of the storage controller SCS, too.

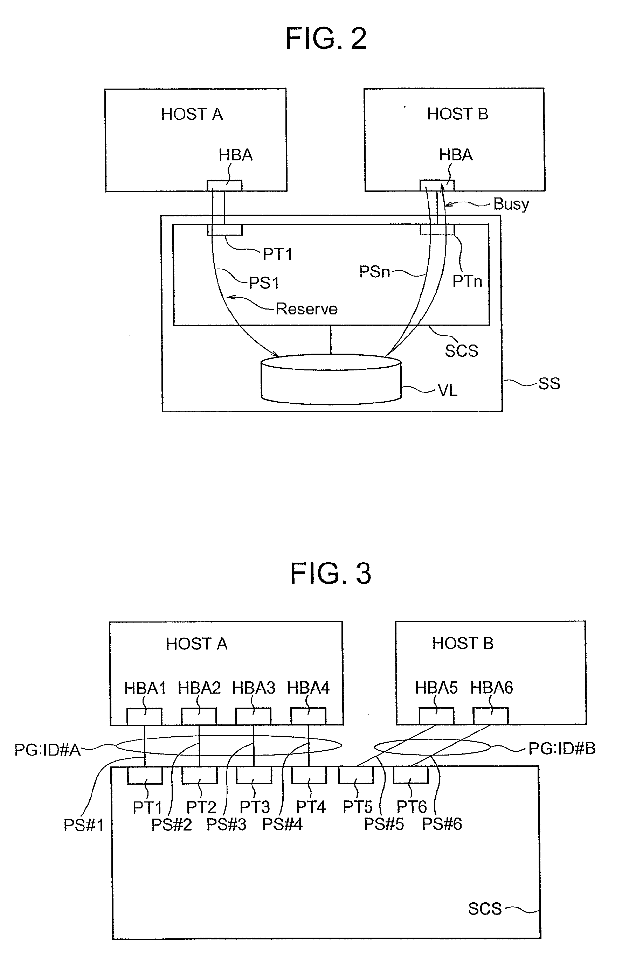

Next, path reserve management in an open system will be explained. Fig. 2 is a conceptual view for explaining reserve management by simplifying the information processing system shown in Fig. 1. It will be assumed in Fig. 1 that two hosts, HOST A and HOST B are connected to the storage subsystem SS. When a certain host (here, HOST A) executes an I/O processing such as a series of write/read operations to and from a specific drive of the volume VL (hereinafter explained merely as "specific volume VL"), this reserve management means has a contrivance (reserve) such that HOST A executing this I/O processing holds the access right to the specific volume from other host (here, HOST B).

As shown in Fig. 2, HOST A accesses the specific volume VL from a host bus adaptor (port) HBA through the port PT1 of the storage controller SCS and executes the I/O processing such as read/write. In other words, HOST A reserves the specific volume of the volume VL through the path PS.

When HOST B accesses at this time to the specific volume VL for the I/O request from the host bus adaptor (port) HBA through a path other than the path PS reserved such as a path PSn through a port PTn of the storage controller SCS, a busy (Busy) state is reported to this other pass PSn and the I/O request is rejected. The concept of reserve is common between the main frame and the open system but the range of the paths as the reserve object may be different depending on the path management system as will be later described.

The path management in the main frame has the concept of "path group" for managing a plurality of physical paths as one group as already described. In this management, the host assigns an ID to each path group and the storage controller for controlling the volume VL recognizes the paths having the same ID as the same group.

The outline of the formation procedure of the path group is as follows. Referring to Fig. 3, it will be assumed that HOST A has a plurality of ports HBA1, HBA2, HBA3 and HBA4 and HOST B has a plurality of ports HBA5, HBA6, and so forth.

(1) A link is established from HOST A to the volumes through the ports PT1, PT2, PT3 and PT4 of the storage controller SCS, and (2) logical paths PS#1, PS#2, PS#3 and PS#4 are formed. On the other hand, a link is established to the volumes from HOST B through the ports PT5 and PT6 of the storage controller SCS and logical paths PS#5 and PS#6 are formed.

(3) HOST A and HOST B generate command "SET PATH GROUP ID" for forming the respective path groups. The ID of the host received by this command is stored in the storage controller SCS. (4) The storage controller SCS manages the paths (PS#1, PS#2, PS#3, PS#4) having the same ID as the same path group PG:ID#A and the paths having the same ID (PS#5, PS#6) as the other same path group PG:ID#B different from the former. Such a concept of path groups does not exist in the open system.

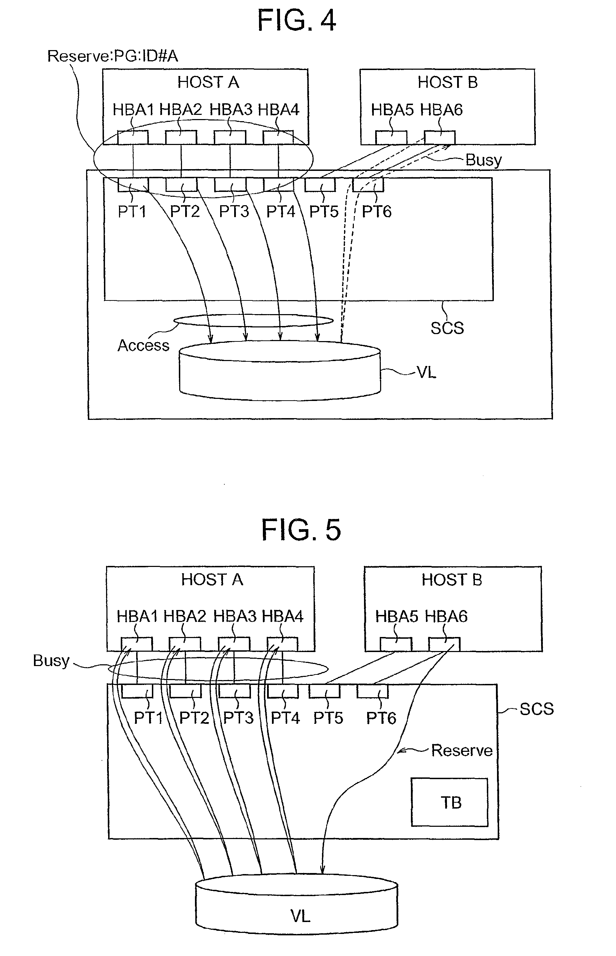

Next, path reserve in the main frame will be explained. Fig. 4 is an explanatory view for explaining the concept of path reserve in the main frame. As described above, reserve in the path group unit is possible in the main frame besides reserve in the physical unit. When reserve is made from the path group PG:ID#A of HOST A to the volume VL, the access to the volume VL is possible when the path is the one that is inside the path group PG:ID#A. However, the access from the paths other than this path group, for example, the access from the path passing through the port HBA6 of HOST B and then through the port PT6 of the storage controller SC, becomes Busy and the access cannot be made until the reserve state is released.

Incidentally, the term "physical path unit" given above is strictly the logical path unit for reserve in the main frame. The path group is formed by grouping the logical paths. When two I/O paths exist from each of three hosts and the storage controller as the object of reserve has two physical paths, six paths in total exist between the three hosts and the storage subsystem. The "path group" can be formed by grouping two logical path units from each host.

Next, reserve in the open system will be explained. Fig. 5 is an explanatory view for explaining reserve in the physical path unit in the open system. The concept of the path group in the main frame described above does not exist in the open system and reserve is basically conducted in the physical path unit. In the example shown in Fig. 5, a reserve command is generated from the port HBA6 of HOST B to the volume VL and a mode is in the reserve mode. Therefore, HOST A cannot naturally access the volume VL until this reserve is released.

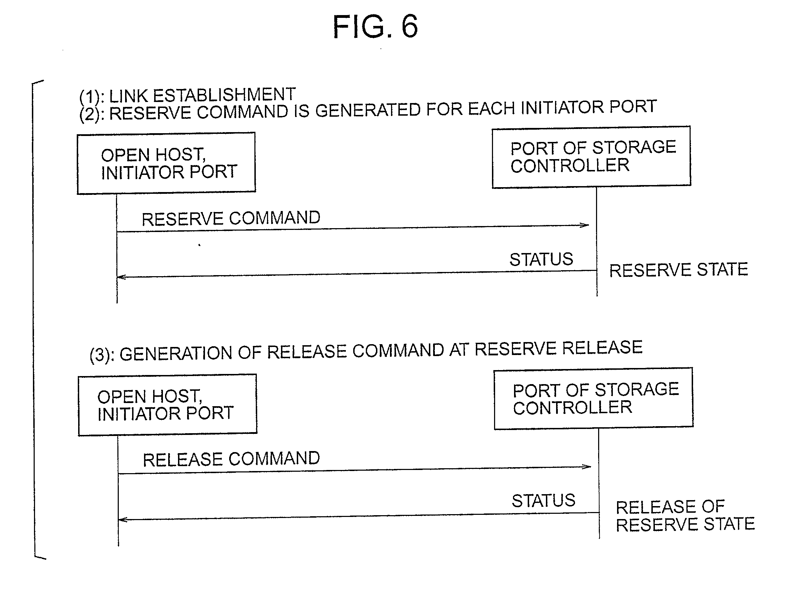

Fig. 6 is an explanatory view for explaining a procedure for executing reserve in the physical path unit. First of all, a host of the open system (1) establishes a link at the time of reserve and an initiator port (a port of the host establishing this link) generates a reserve command to the port of the storage controller SCS. The storage controller SCS enters the reserve state and returns the status of the reserve state to the host of the open system. This reserve information is stored in the table TB of the storage controller.

When this reserve is released, a release command is generated from the initiator port of the host to the port of the storage controller SCS. The storage controller SCS releases the reserve state and returns the status of the reserve release to the host of the open system. Incidentally, the status information is written to the table TB of the storage controller. This table TB is provided to the control memory MRC explained with reference to Fig. 1.

When any failure occurs in the path reserved (the physical path from the port HBA6 in the case of Fig. 5), the reserve made from HOST B for the volume VL remains (occurrence of remaining reserve). When the remaining reserve occurs, access from other paths cannot be made consecutively. Therefore, the reserve state must be released.

The following two methods are available to release this reserve state. (a) The first operates a reset processing of the volume reserved on the side of the storage subsystem. (b) The other method generates a "target reset" command from the ports other than the reserve path. The reserve state can be forcedly released by any of these methods.

The existing open system does not have means for judging whether or not the reserve may be released from other path on the side of the storage subsystem. Therefore, when a third party intentionally generates the command of (b) described above, reserve that should not originally be released may be released from other paths and this renders the security problem.

The open system does not have the concept of the path group as described above. Therefore, conventionally, when a certain volume is reserved from a certain physical path, access to this volume from other physical paths is not possible. However, because the concept "Persistent Reserve" is introduced into the SCSI protocol, reserve for the same volume from a plurality of physical paths becomes possible. Consequently, simultaneous access for the same volume from a plurality of physical paths becomes possible. The outline of this reserve processing will be explained next.

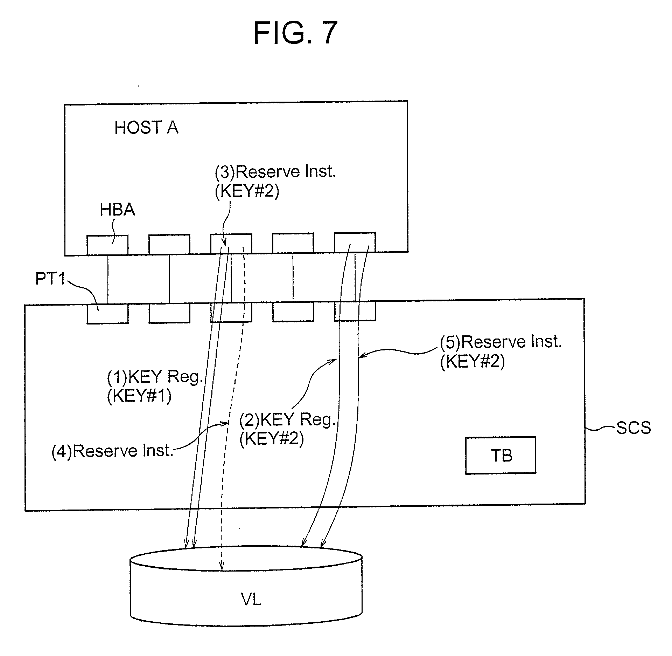

Fig. 7 is an explanatory view for explaining the reserve system of a plurality of physical paths in the open system. Fig. 7 shows only one (HOST A) of the hosts, one storage controller and one volume. The reserve system of a plurality of physical paths will be explained with reference to the reference numerals designated to the drawing. First, (1), (2) key (KEY) information is registered in the physical path unit (Persistent Reserve Out (key registration command)). This registration is stored in the table TB of the storage controller SCS.

Next, (3) the reserve command equipped with KEY information registered in the physical unit is generated (Persistent Reserve Out (Reserve Command)). When the KEY information inside the reserve command received on the storage subsystem side is coincident with the KEY information registered in (1), the reserve command is accepted and the volume is brought into the reserve state for this physical path. (4) When the reserve command having the KEY information different from the KY information registered in (1) is received, this command is rejected and the reserve processing is not executed, either. In the case of Fig. 6, the result proves NG because the reserve of the KEY#2 command reaches the physical path registered by KEY#1. (5) Because KEY#2 is registered in this physical path, the reserve command is accepted if it is the reserve command designating KEY#2. Incidentally, the content of the KEY information depends on the host (time stamp, World Wide Name, etc).

When any path failure occurs under the state where a specific volume is reserved from the path subjected to KEY registration by the processing described above, this volume remains reserved and access to this volume from other paths cannot be made in some cases. The SCSI command protocol stipulates means for compulsively releasing the reserve state of the path having the failure from other physical paths in order to release the reserve state and to compulsively release the reserve state of the path having the failure from other physical paths.

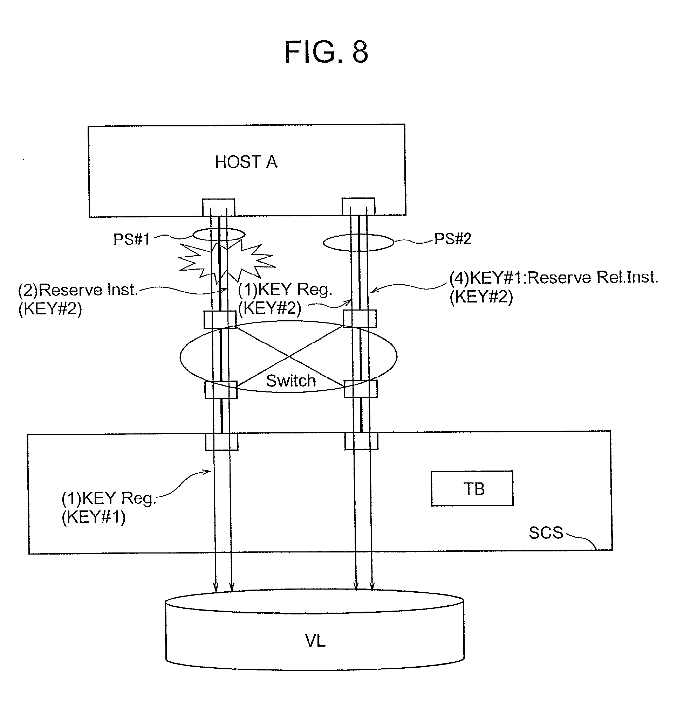

Fig. 8 is an explanatory view for explaining the procedure of the reserve release processing at the time of a path failure in the open system. Fig. 8 shows only one (HOST A) of the hosts, one storage controller SCS and one volume VL, and a reserve system of a plurality of physical paths will be explained by using reference numerals designated in the drawing. Incidentally, explanation will be given on the assumption that HOST A and the storage subsystem are connected through a Fibre Channel or Switch. First, (1) KEY#1 and KE#2 are registered in path #1 and path #2, respectively. These registration information can be registered by storing them in the table TB of the memory MRC of the storage controller SCS.

(2) Reserve command (KEY#1) is given in the path #1. (3) Failure occurs in the path #1 and remaining reserve of the volume VL occurs. (4) It is possible to designate in the path #2 so that the path of KEY#2 takes the reserve state of KEY#1 of the path #1. As one of the functions of hosts, some hosts automatically release the reserve state from another normal physical path under control of the hosts upon detecting the path failure.

In the case described above, it is not clear on the storage subsystem side to know whether or not the reserve release command is reasonable. Therefore, if a third party intentionally gives the reserve release command from other physical path, the reserve that should not be released originally can be illegally released in the same way as in the cases shown in Figs. 4 and 5 and the security problem develops.

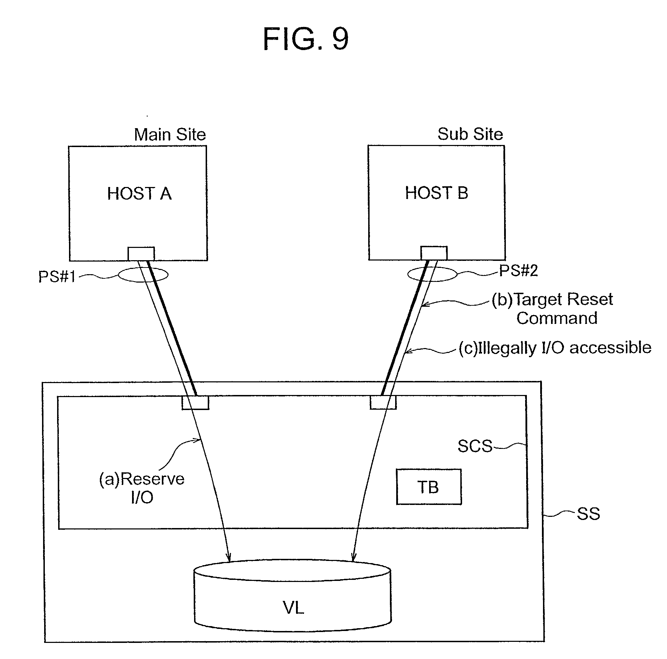

Fig. 9 is an explanatory view for explaining the illegal release in the open system. A method that compulsively releases reserve when any fault occurs in the path that is now reserved is available, but when the "target reset" command is generated from ports other than the reserved path, reserve of the target (specific volume) designated can be compulsively released. The storage controller side does not have means for checking whether or not the generation of this command is reasonable.

Referring to Fig. 9, this system has an alternate host for conducting backup at the time of occurrence of the failure. HOST A is a main site host and HOST B is a backup side host. (a) It will be assumed that HOST A of the main site reserves the volume and is under execution of I/O. (b) When the target reset command is illegally generated under this state from HOST B of the sub site and the reserve state of this volume VL is released, (c) a series of I/O processing is executed because HOST A is under the reserve state but practically, the reserve state of the volume is released by (b). Therefore, access to this volume from other hosts becomes possible and matching of the data of this volume is sometimes lost.

When reserve is executed by the "Persistent Reserve" system, means for releasing this reserve from other paths (Persistent Reserve OUT (reserve release command)) is available but the storage subsystem side does not have means for checking whether or not the generation of this command is reasonable.

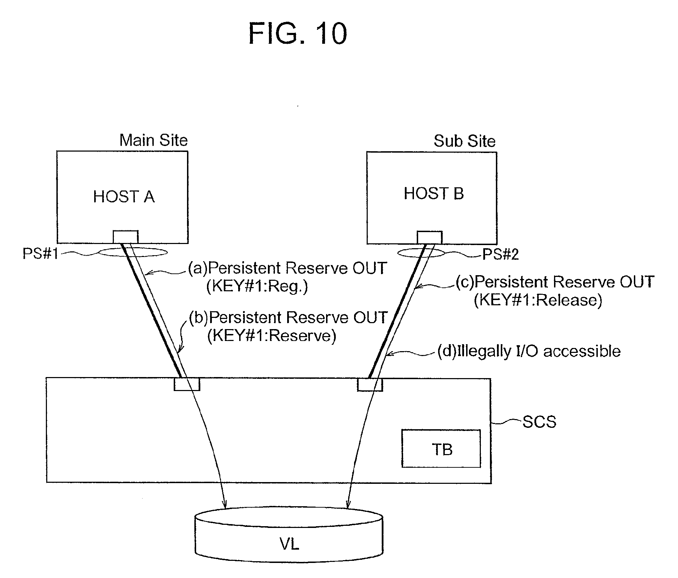

Fig. 10 is an explanatory view for explaining an example of release of illegal reserve in the open system and an example of this illegal reserve release will be explained with reference to Fig. 10. In Fig. 10, (a) HOST A of the main site executes KEY registration for the path PS#1 to reserve the volume VL (Persistent Reserve OUT (KEY#1: Reg.)). (b) While HOST A reserves the volume and executes the I/O processing (Persistent Reserve OUT (KEY#1: Reserve)), (c) HOST B of the sub site illegally releases the reserve state executed by HOST A by KEY#1 designation (Persistent Reserve OUT (KEY#1: Release)). (d) Because HOST A assumes that the volume is reserved, it executes a series of I/O processing. However, the reserve of this volume VL is released by (b) in practice, access to this volume VL from other hosts becomes possible (illegally I/O accessible). As a result, matching of the data of this volume is likely to be lost.

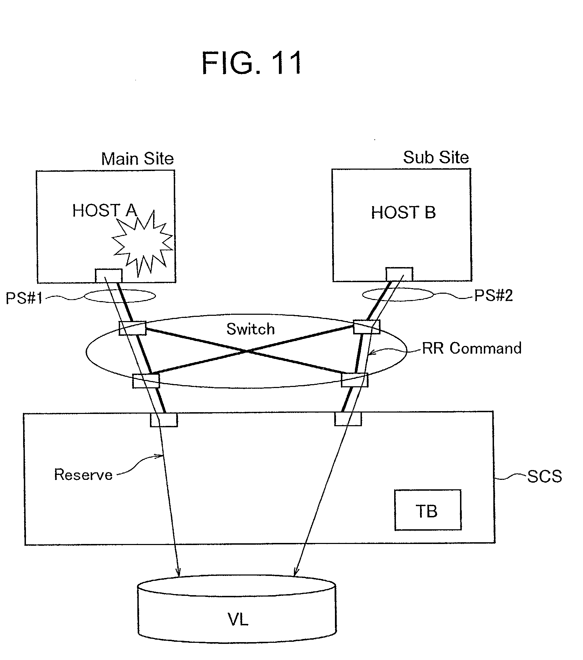

Fig. 11 explains the reserve release at the time of the path failure in the open system. To avoid system-down at the occurrence of a failure, this system includes a plurality of hosts arranged at remote places through a network or a switch. When a fault occurs in HOST A of the main site while the volume VL is reserved by the path PS#1 of the host A of the main site, the command for reserve release (release command) must be generated from HOST B of the sub site to the storage controller SCS through the path PS#2 to release this reserve state. This release is not executed automatically and the access to this volume cannot be made until the reserve is released. It is also troublesome to generate the command for the reserve release from HOST B.

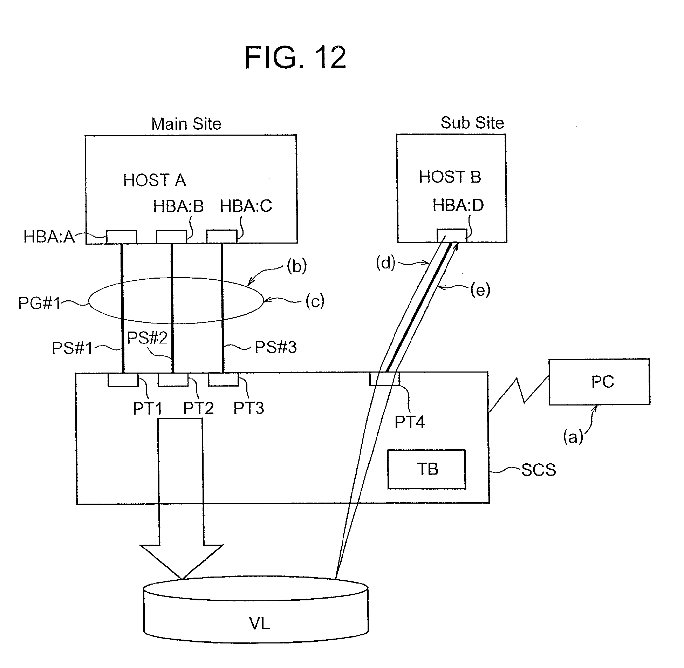

Fig. 12 is an explanatory view of an information processing system having improved security by employing measures against the illegal path release. In this system, data input means such as a personal computer is connected to the storage controller SCS of the storage subsystem. Here, the personal computer PC is connected through an LAN. Check execution of the illegal reserve release request will be explained in the sequence of reference symbols. The system includes the main site and the sub site explained with reference to Figs. 9 to 11. It will be assumed hereby that HOST A of the main site reserves the volume VL from its ports HBA·A, HBA·B and HBA·C through the path PS#1 to the ports PT1, PT2 and PT3 of the storage controller.

Referring to Fig. 12, (a) the personal computer PC inputs path information as the path group and the storage controller SCS manages the path group. For example, the physical paths PS#1 (port HBA·A - port PT1), PS#2 (port HBA·B - port PT2) and PS#3 (port HBA·C - port PT3) are defined as the path group PG#1 and are instructed to the storage controller SCS. This instruction is stored in the table TB. HOST A recognizes this path group information, too. Incidentally, KEY registration may be made for the paths PS#1, PS#2 and PS#3 from HOST A. In the KEY information hereby registered, the path PS#1 corresponds to KEY#1, the path PS#2 corresponds to KEY#2 and the path PS#3 does to KEY#3. However, registration of so-called "Persistent Reserve" as described in (b) is not essentially necessary.

(c) "Persistent Reserve OUT (Reserve at KEY#1)" is designated on the path PS#1 from HOST A. The storage controller SCS recognizes that reserve is made from the entire path group PG#1 inclusive of this path PS#1.

(d) HOST B generates "Persistent Reserve OUT (release designation)" command at KEY#1 to illegally release the reserve state through the path PS#1 of HOST A. (e) However, because this path PS#1 does not belong to the path group managed by the storage controller SCS, the reserve release request is rejected.

As described above, which physical paths are to be grouped is instructed in advance to the storage controller CS. Therefore, even when the third party intentionally attempts to release the reserve state from other paths, the reserve release from the paths other than those of the group is not permitted and the illegal reserve release is inhibited. Security can be thus improved.

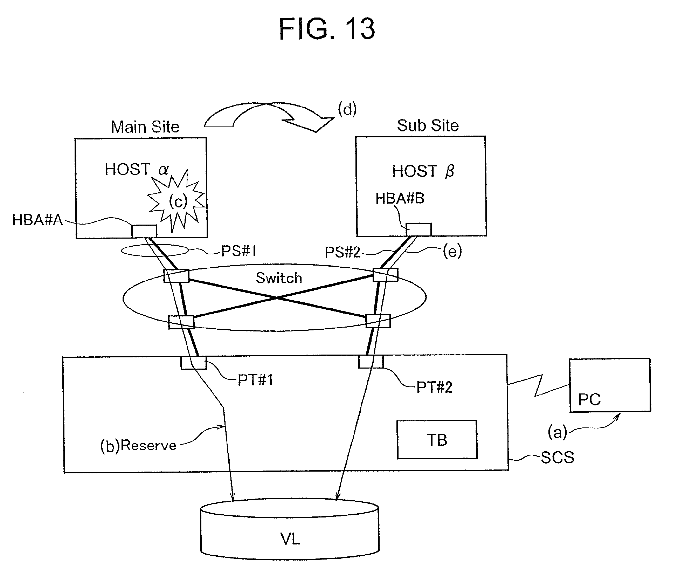

Fig. 13 is an explanatory view for explaining the reserve release processing at the time of a path failure for facilitating system exchange when the system having main and sub sites is in trouble. The physical paths from the hosts of the main and sub sites are set in advance as groups to the storage controller. Therefore, even when the system of the host of the main site breaks down and the reserve state is left remaining, the information processing system can be consecutively operated by use of the grouped paths from the host of the sub site.

The system exchange processing at the time of the system failure will be explained in the sequence of reference symbols designated in Fig. 13. (a) Path group information is set from the personal computer PC to the storage controller SCS. For example, the physical path PS#1 (port HBA#A of HOST α - port PT#1) and the physical path PS#2 (port HBA#B of HOST β - port PT#2) are defined as a path group PG#1 and are instructed to the storage controller SCS. (b) Reserve is executed from HOST α to the volume VL through the path PS#1 (Reserve).

(c) As a failure occurs in HOST α, (d) it is switched to HOST β. Reserve of the volume VL remains as such. (e) Because the path PS#2 of HOST β belongs to the same group as the path PS#1 of HOST α, execution of I/O from HOST β is possible while the reserve state remains as such. Therefore, it is not necessary to release this reserve intentionally set in (b) from HOST β.

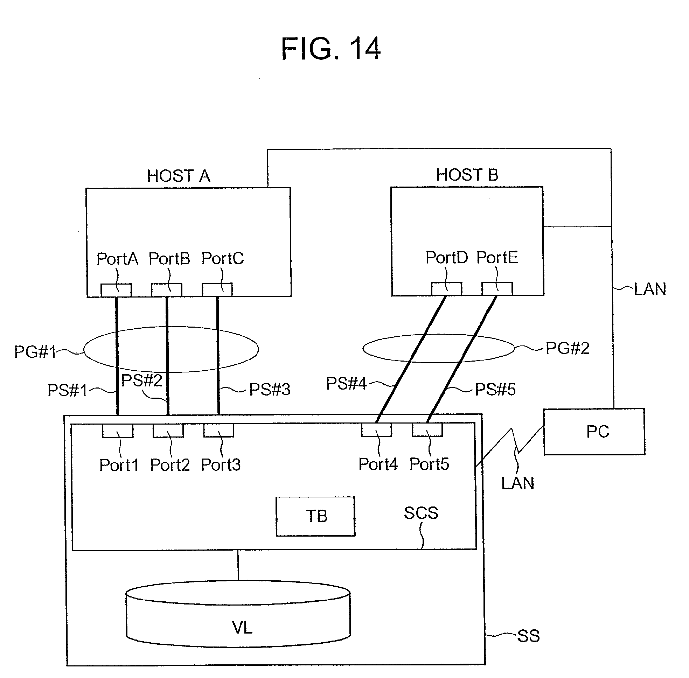

Fig. 14 is an explanatory view for explaining in further detail the construction of the information processing system according to the invention. To have the explanation more easily understood, the ports of HOST A will be called "Port:A", "Port:B" and "Port:C" and the ports of HOST B will be called "Port:D" and "Port:E". Further, the ports of the storage controller will be called "Port:1", "Port:2", "Port:3", "Port:4" and "Port:5". HOST A and HOST B are the hosts that are connected in the open system. The hosts are connected to the storage subsystem SS either directly or through the network.

The personal computer PC for inputting information and data from outside the system is connected through the LAN to the storage controller SCS, HOST A and HOST B that together constitute the storage subsystem SS. It is possible from this personal computer PC to input which physical paths are to be handled as the group. The information inputted from the personal computer PC is transmitted to not only the storage controller SCS but also HOST A and HOST B and the information transmission to the storage controller SCS and each host is updated. The personal computer PC establishes synchronization so that the information becomes effective for the first time.

Incidentally, it is not essentially necessary to connect the personal computer PC to HOST A and HOST B of the open system through the LAN. As will be described later, the storage controller SCS, HOST A and HOST B may well recognize one other by using "Mode Sense Command".

Table 1 tabulates path group setting information inputted from the personal computer PC. As tabulated in Table 1, the path group may be directly designated or the storage controller may automatically form the physical path group by inputting the function level as will be later described.

**[Table 1]**

| <Path group setting information from outside> | | |
|---|---|---|
| Group number | Host side Physical port address | Storage controller side physical port address |
| 1 | Port: A | Port: 1 |
| | Port: B | Port: 2 |
| | Port: C | Port: 3 |
| 2 | Port: D | Port: 4 |
| | Port: E | Port: 5 |

In Table 1, the group number 1 represents the path group PG#1 constituted by the physical paths PS#1 to PS#3 shown in Fig. 14 and the group number 2 represents the path group PG#2 constituted by the physical paths PS#4 to PS#5 shown in Fig. 14.

The storage controller SCS manages the physical paths as tabulated in Table 2 and further manages the physical paths as the path group shown in Table 3 in accordance with the inputted path group information.

**[Table 2]**

| Physical path management table | | |
|---|---|---|
| Path number | Host side Physical port address | Storage controller side physical port address |
| 1 | Port: A | Port: 1 |
| 2 | Port: B | Port: 2 |
| 3 | Port: C | Port: 3 |
| 4 | Port: D | Port: 4 |
| 5 | Port: E | Port: 5 |

In Table 2, the path number corresponds to the physical paths PS#1 to PS#5 shown in Fig. 14.

**[Table 3]**

| Path group management table | |
|---|---|
| Group # | Path # |
| 1 | 1 |
| | 2 |
| | 3 |
| 2 | 4 |
| | 5 |
| . . . . | . . |
| | . . |

In Table 3, the group # corresponds to the paths groups PG#1 and PG#2 shown in Fig. 14.

When the reserve command is given under this state from the physical path PS#1 to the volume VL (more specifically, a specific logic unit constituting the volume VL) from the physical path PS#1, the path PS#1 reserves the volume VL and reserve of this volume by the path PS#1 is recorded to Table 4. The path PS#1 belongs to the path group PG#1 as tabulated in Table 3 and reserve of this volume VL by the path group is recorded, too.

**[Table 4]**

| Reserve management table | | | |
|---|---|---|---|
| VOL¨# | Status flag (*2) | Path # | Reserve flag (*3) |
| 1 | X'40' | 1 | X'80' |
| | | 2 | X'00' |
| | | 3 | X'00' |
| 2 | X'00' | 4 | X'00' |
| | | 5 | X'00' |
| . . . . | . . . . | . . | . . |
| | | . . | . . |

When the I/O request is thereafter generated for the volume VL from HOST B through the path PS#2, the state in which the volume VL is reserved is recognized. However, because the system is under the group reserve state, Table 3 is looked up to examine whether or not this path PS#2 belongs to the same group as the path PS#1 that reserves the volume VL. Because the path PS#1 and the path PS#2 are found belonging to the same group as a result of this reference, the I/O request from the path PS#2 for the volume VL is accepted and executed. When the path PS#2 is not found belonging to the same group as a result of the reference, the I/O request from the path PS#2 is not accepted and Busy is given in response.

Here, the method of giving grouping information will be explained in supplementation. The combination of the paths to be grouped may be given concretely as shown in Table 1. Alternatively, the storage subsystem may individually conduct by itself grouping by reporting the function level. This function level will be hereinafter explained.
Function level "0": Without support
Function level "1": The same host (inclusive of production number) belongs to the same group.
Function level "3": The hosts of the same manufacturer belong to the same group.

The manufacturer code of the host and its production number may use "World Wide Name". Table 5 shows a table in which the manufacturer code and the production number are added to Table 2.

**[Table 5]**

| Physical path management table | | | | | | |
|---|---|---|---|---|---|---|
| | Host side port information | | | Storage controller side port information | | |
| Path # | manufacturer code | production # | address | manufacturer code | production # | address |
| 1 | xxx | yyy | zzz | AAA | BBB | CCC |
| 2 | | | | | | |
| . . . . . . . . | . . . . . . . . | . . . . . . . . | . . . . . . . . | . . . . . . . . | . . . . . . . . | . . . . . . . . |

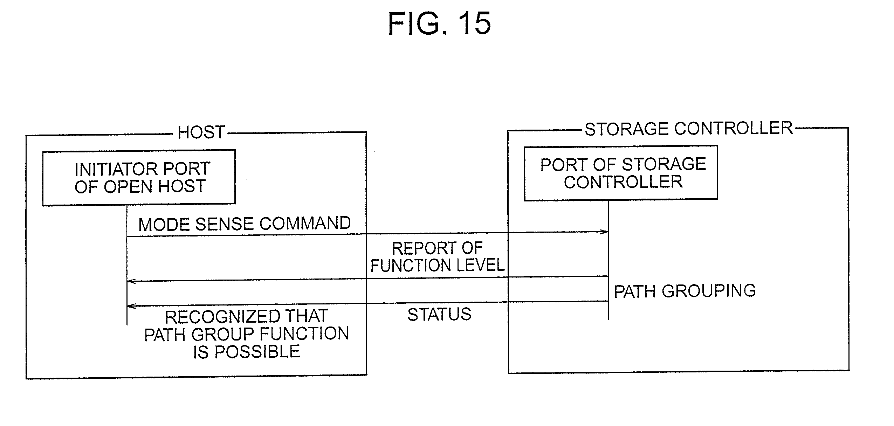

When the personal computer externally connected to the storage controller of the storage subsystem is similarly connected to the host as in the construction shown in Fig. 14, consciousness matching is possible by giving path group information from the personal computer to the host. Besides, the method shown in Fig. 15 is available.

Fig. 15 is an explanatory view for explaining another method of consciousness matching between the host and the storage controller. The host of the open system generates "Mode Sense" command from the port (expressed as "initiator port" in Fig. 15) to the port of the storage controller. Receiving this "Mode Sense" command, the storage controller reports any of the function levels "0", "2" and "3" described above to the host. The storage controller executes grouping and returns that status to the host. The host recognizes that the path group function is OK.

Next, addition or deletion of the paths to or from the existing group will be explained. The number of the existing path group and the physical path to be added are designated from the personal computer externally connected to the storage controller and the command "Addition" is given. In this way, new physical paths can be added to the existing path group. Receiving this "Addition" command, the storage controller adds the path designated to the path group table of Table 3.

Similarly, only the designated physical path can be excluded from the group by designating the number of the existing path group and the physical path to be deleted. It is further possible to give instruction for releasing grouping itself. Such information is likewise reported to the host and the host side updates the same path group management table.

Next, the detail of the processing procedure explained so far will be explained with reference to a flowchart.

### [Processing procedure of storage controller]

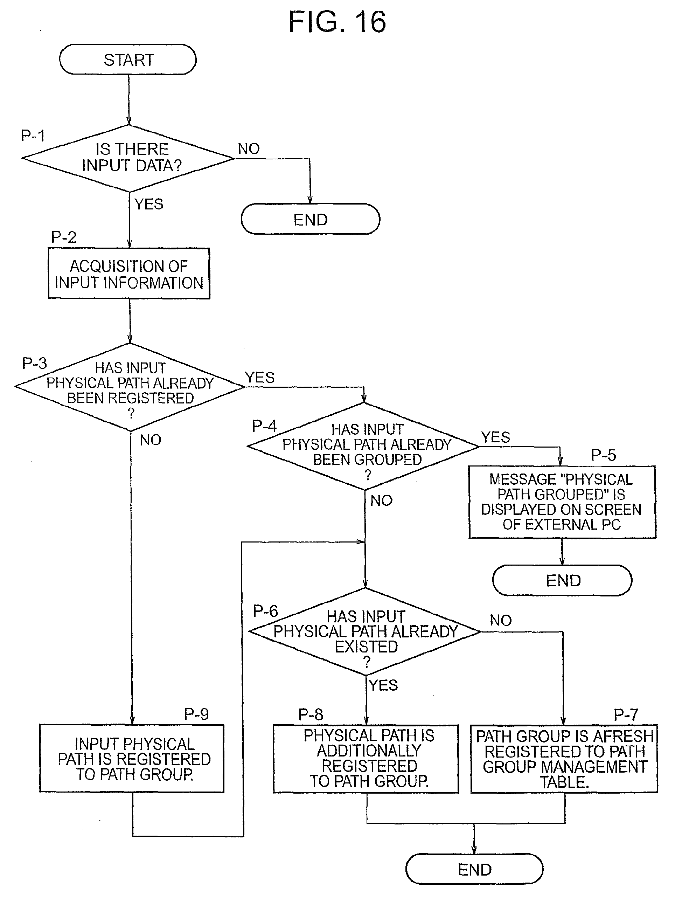

Fig. 16 is a flowchart for explaining the procedure for grouping the physical paths by concretely inputting physical path information from the personal computer externally connected to the storage controller. When the processing is started (START), "existence/absence of input data" is checked (Procedure 1; hereinafter expressed as "P-1"). When the input data exists, the "input information is acquired" (P-2). When the input data does not exist, the processing is terminated (END). Here, the input information includes (1) physical path information (those physical paths which can be distinguished by sets of the physical port address on the host side and the physical port address on the side of the storage controller) and (2) information representing whether or not the physical paths are to be grouped (refer to Table 1).

After the input information is acquired, "whether or not the inputted physical paths have already been registered" is checked (P-3). When they have been registered, the message reading "already grouped to physical path group" is displayed on the screen of the personal computer externally connected (P-5) and the processing is terminated (END). When they have not yet been grouped, "whether or not the inputted path group has already existed" is checked (P-6) and when the path group does not exist, "the path group is registered afresh to the path group management table" (P-7). When the inputted path group has already existed, "the physical paths are additionally registered to the path group" (P-8) and the processing is terminated.

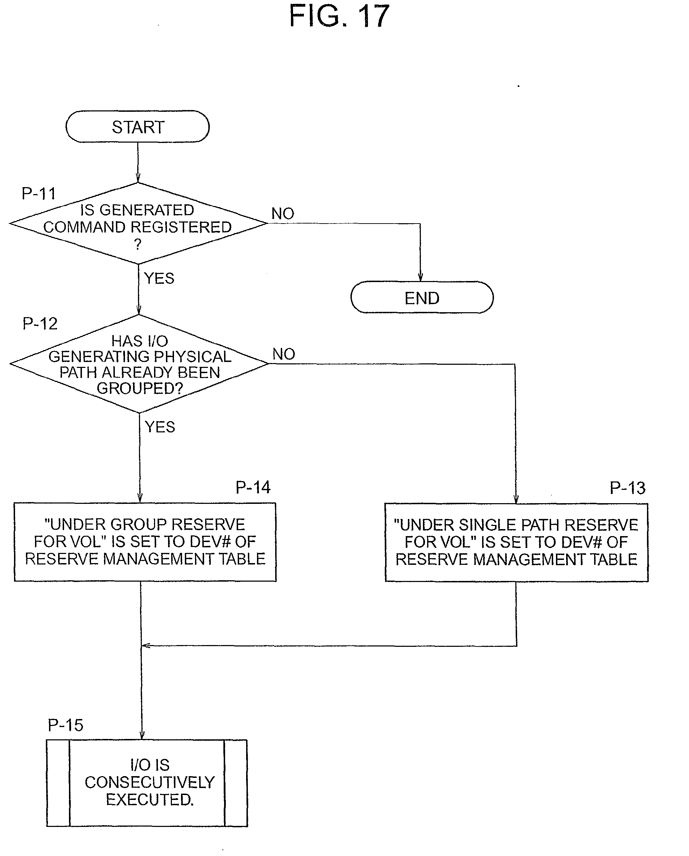

Fig. 17 is a flowchart for explaining the processing procedure when a physical path is brought into the reserve state in accordance with the reserve command given to the certain physical path. When this processing is started, whether or not the generated command is the reserve command is checked (P-11). The processing is terminated when the command is not the reserve command (END). When the generated command is the reserve command, whether or not the physical path generating the I/O has already been grouped is checked (P-12) .

When the result of the step (P-12) represents that the physical path has not been grouped, "single path is now reserved for the volume VL" is set to DEV# of the reserve management table (P-13) and the I/O processing is thereafter executed consecutively (P-15). When the result of the step (P-12) represents that the physical path has already been grouped, on the other hand, "group is now reserved for the volume VL" is set to DEV# of the reserve management table (P-14) and the I/O processing is thereafter executed consecutively (P-15) .

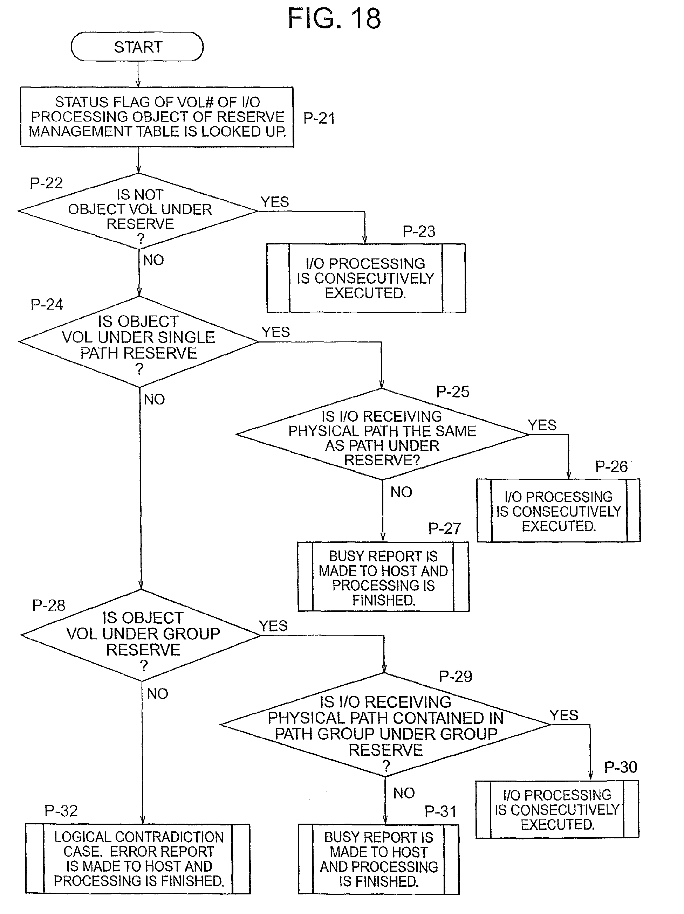

Fig. 18 is a flowchart for explaining the processing procedure for checking whether or not a certain physical path is under the reserved state when the I/O is generated for the physical path. When this processing is started, a status flag of the volume number VL of the I/O processing object in the reserve management table is first looked up (P-21). Next, whether or not the volume VL of the object of the number looked up is under the reserve is checked (P-22) and when it is not under the reserve state, the I/O processing is consecutively executed (P-23).

Whether or not the object volume VL is under single path reserve is checked when the object volume VL having the number looked up in (P-22) is under reserve (P-24). When the object volume VL is under single path reserve, whether or not the physical path receiving I/O is the same as the path under reserve is checked (P-25). When the physical path receiving I/O is the same as the path under reserve, the I/O processing is consecutively executed (P-26). When it is not the same, Busy is reported to the host and processing is terminated (P-27).

When the object volume VL is not under single path reserve in the step (P-24), whether or not the object volume VL is under group reserve is checked (P-28). When the object volume VL is under group reserve, whether or not the physical path receiving I/O is contained in the path group under group reserve (P-29) is checked (P-29). When the result of this check represents that the physical path is contained in the path group, the I/O processing is consecutively executed (P-30) and when not, Busy is reported to the host and the processing is terminated (P-31) . When the object volume VL is not under group reserve in the step (P-28), an error is reported as a "logical contradiction" case (P-32).

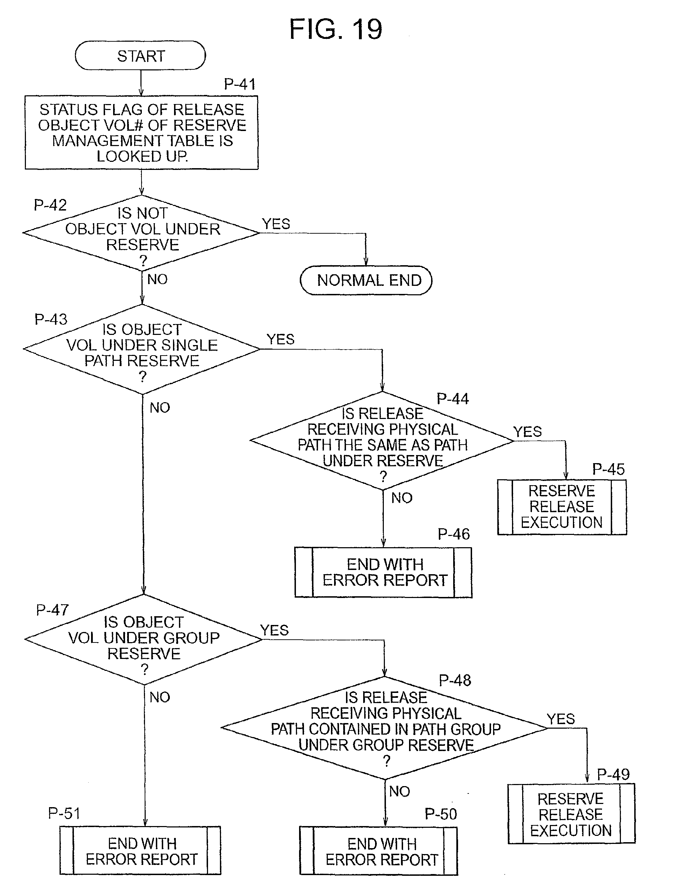

Fig. 19 is a flowchart for explaining a processing procedure for checking whether or not the reserve release command generated is reasonable and for executing reserve release when it is reasonable. When this processing is started, a status flag of the release object volume number of the reserve management table is first looked up (P-41). Whether or not the volume VL having the object number looked up is under reserve is checked (P-42) and the processing is normally terminated when the volume VL is not under reserve. When the object volume VL having the number looked up is under reserve, whether or not the object volume VL is under single path reserve is checked (P-43). When the object volume VL is under the single path reserve, whether or not the release receiving physical path is the same as the path under reserve is checked (P-44) and reserve release is executed when it is the same. When it is not the same, the error is reported and the processing is terminated (P-46).

When the object volume VL is not under single path reserve in the step (P-43), whether or not the object volume VL is under group reserve is checked (P-47) and when it is under group reserve, whether or not the release receiving physical path is contained in the path group is checked (P-48). When the release receiving physical path is contained in the path group under group reserve, reserve release is executed (P-49). When the release receiving physical path is not contained in the path group under group reserve, the error is reported and the processing is terminated (P-50). When the object volume VL is not judged as being under group reserve in the step (P-47), the error is reported and the processing is terminated (P-51).

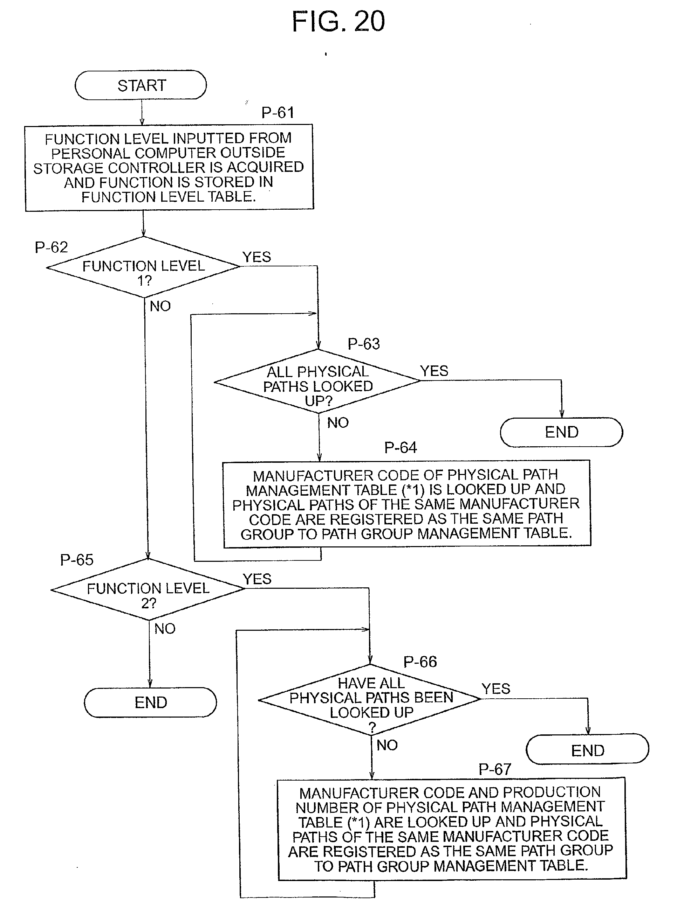

Fig. 20 is a flowchart for explaining the processing procedure for the storage controller to conduct grouping on the basis of only the report of the function level when the input from outside the storage controller is the function level. It will be assumed hereby that the function level "1" = > same path group for each manufacturer and the function level "2"= > same host (check is made up to production number) belong to the same path group. Refer to Table 5 for the table for this processing. When this processing is started, the function level inputted from the personal computer outside the storage controller is first acquired. The function of the function table (physical path management table in Fig. 5) is recorded (P-61). Next, whether or not the function level is "1" is checked (P-63). When the function level is "1", whether or not all the physical paths have already been looked up is checked (P-63) and when they have been looked up, the processing is terminated (END). When they have not yet been looked up, the manufacturer code of the physical path management table (Table 5) is looked up and the physical paths of the same manufacturer code are handled as the same path group and are registered to the path group management table (Table 3). This procedure is repeated until all the physical paths are looked up.

When the function level is not judged as "1" in the step (P-62), whether or not the function level is "2" is judged (P-65). When the function level is "2", whether or not all the physical paths have been looked up is judged (P-66) and when they have been looked up, the processing is terminated (END). When they have not yet been looked up, the manufacturer code and the production number of the physical path management table (Table 5) are looked up and the physical paths from the same host are registered as the same path group to the path group management table (Table 3) (P-67). This processing is repeated until all the physical paths are looked up.

### [Processing procedure on host computer side]

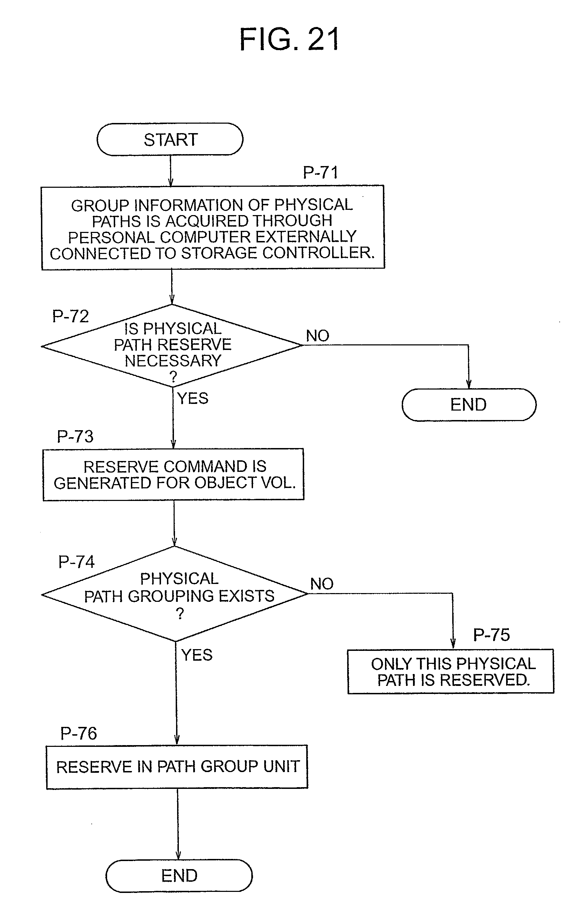

Fig. 21 is a flowchart for explaining the processing procedure of reserve management on the side of the host computer. The host computer (host) acquires path group information managed by the storage controller and executes processing by recognizing all the physical paths inside the same path group as being under reserve by merely generating reserve to an arbitrary physical path belonging to the path group.

When this processing is started, the group information of the physical path is first acquired through the personal computer externally connected to the storage controller (P-71). Next, whether this physical path reserve is necessary is checked (P-72). When the reserve is not necessary, the processing is terminated (END). When it is found necessary, the reserve command is generated for the object volume (P-73). Next, existence/absence of physical path group is checked (P-74) and when it does not, only the physical path is reserved (P-75). When physical path grouping is judged as existing, reserve is made in the path group unit (P-75) and the processing is terminated (END) .

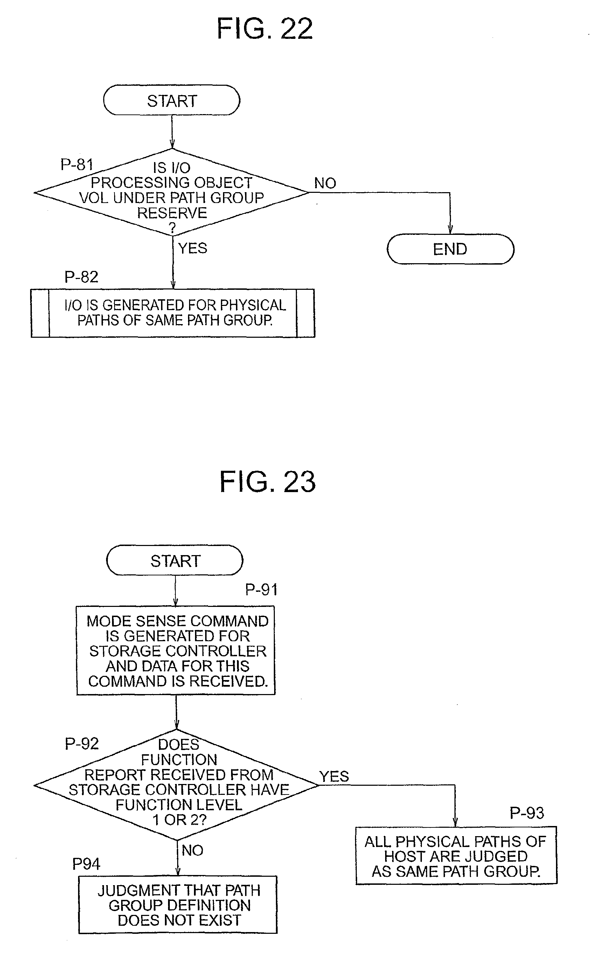

Fig. 22 is a flowchart for explaining the processing procedure for generating I/O to other path inside the same path group when the host computer has already reserved the physical path in the physical path group unit. When this processing is started, whether or not the volume as the I/O processing object reserves the physical path group (P-81) is first checked (P-81). When the object volume is not under reserve, the processing is terminated (END) and when it under reserve, I/O is generated for the physical paths inside the same path group (P-82).

Fig. 23 is a flowchart for explaining the processing procedure for the host computer side to decide the paths to be grouped in accordance with the function level transmitted to the storage controller in response to the "Mode Sense" command generated by the host computer. It will be assumed hereby that the function level "1" = > same path group for each manufacturer and the function level "2" = > same host (check is made up to production number) belong to the same path group in the same way as described above. When this processing is started, the "Mode Sense" command is generated for the storage controller. The data corresponding to this command is received (P-91). Next, whether the function report received from the storage controller is "1" or "2" is checked (P-92). When the function level so received is "1" or "2" as a result of the judgment, all the physical paths of the host are judged as belonging to the same path group. On the other hand, when the level of the function report received is neither "1" nor "2", path group definition is not judged as existing (P-94).

## Claims

1. Path reserve management apparatus in an information processing system, the information processing system including:
one or more hosts (HOST); and
a storage subsystem (SS) including one or more storage units (DR) and a storage controller (SCS) for controlling said one or more storage units, said storage subsystem being connected to said one or more hosts to form physical paths therebetween, and executing input/output and management of data with said one or more hosts,
wherein the path reserve management apparatus includes, in the storage controller, an external
input unit and an information storage unit for storing at least one of the physical paths as one group based on
information inputted from said external input unit, the apparatus being arranged such that:
a reserve command generated for a specific one of said storage units from one of the grouped physical path: is recognized as a reserve from all of the grouped physical paths, and
when said system undergoes a failure under the recognition state, an input/output command from another physical path not belonging to the group is rejected and a busy report is sent to that other physical path.

2. Path reserve management apparatus according to claim 1, wherein grouping of the physical paths is explicitly set from said external input unit to said information storage unit.

3. Path reserve management apparatus according to claim 1, wherein said storage controller includes a function level storage unit, and grouping of the physical paths is conducted in accordance with a function level inputted from said external input unit.

4. Path reserve management apparatus according to claim 1, wherein grouping of the physical paths is conducted on a on a function level reported from said host to said storage controller.

5. Path reserve management apparatus according to claim 1, wherein other physical path or paths can be added to the physical path group when the physical path group is in a reserve state.

6. Path reserve management apparatus according to claim 1, wherein an arbitrary physical path can be deleted from the physical path group.

7. Path reserve management apparatus according to claim 5, wherein addition of the physical path is made from said external input unit.

8. Path reserve management apparatus according to claim 6, wherein deletion of said physical path is made from said external input unit.

9. Path reserve management apparatus in an information processing system, the information processing system including:
one or more hosts (HOST); and
a storage subsystem including a storage unit (DR) and a storage controller for controlling (SCS) said storage unit, said storage unit being connected to said one or more hosts to form physical paths therebetween, and executing input/output and management of data with said one or more hosts,
wherein the path reserve management apparatus includes, in the storage controller, an external input unit for inputting information about a physical path group recognized by said storage controller, and an information storage unit for storing at least one of the physical paths as one group based on information inputted from said external input unit, the apparatus being arranged such that:
an input/output command can be generated from a
physical path belonging to a physical path group when any one of the other physical paths within that physical path group in a reserve state.

10. Path reserve management apparatus according to claim 9, wherein said storage controller allows both of said host and said storage controller to recognize a same physical path by using a computer that reports, responsive to a command from said host, a function level supported by said storage controller to said host.
